**Europäisches Patentamt**

**European Patent Office**

**Office européen des brevets**

(19)

(11) Veröffentlichungsnummer: **0 043 417**
A2

(12) # EUROPÄISCHE PATENTANMELDUNG

(21) Anmeldenummer: **81103222.6**

(22) Anmeldetag: **29.04.81**

(51) Int. Cl.³: **B 01 D 46/04**

(30) Priorität: **05.07.80 DE 3025548**

(43) Veröffentlichungstag der Anmeldung: **13.01.82**
**Patentblatt 82/2**

(84) Benannte Vertragsstaaten: **AT BE CH DE FR GB IT LI LU NL SE**

(71) Anmelder: **Degussa Aktiengesellschaft, Postfach 110533, D-6000 Frankfurt 1 (DE)**

(72) Erfinder: **Bach, Hans-Friedrich, Dr., Schwabenstrasse 4, D-8011 Poing (DE)**
Erfinder: **Bode, Henning, Dr., Somborner Strasse 9, D-6467 Hasselroth 3 (DE)**
Erfinder: **Kluge, Andreas, Dr., Rob-Schumannstrasse 13, D-6053 Obertshausen (DE)**

(54) **Verfahren zur Abreinigung von Filtertüchern mittels Druckgas-Impuls bei der Feststoffabscheidung aus Gasen.**

(57) Verfahren zur Abreinigung von Filtertüchern mittels Druckgas-Impuls bei der Feststoffabscheidung aus Gasen.

Bei der Abscheidung von Feststoffpartikel aus Gasen kann die Leistung der Filterfläche beträchtlich erhöht werden, wenn die Abreinigung der Filterschläuche mittels Druckgas-Impulsen derart gesteuert wird, daß statt eines einzelnen Druckgas-Impulses eine Druckgas-Impulsgruppe angewandt wird.

EP 0 043 417 A2

Degussa Aktiengesellschaft
6000 Frankfurt am Main 1

Verfahren zur Abreinigung von Filtertüchern mittels Druckluft-Impuls bei der Feststoff-abscheidung aus Gasen.

Die Feststoffabscheidung mittels mit Druckluft oder Druckgas abgereinigten Filtern (sogenannten puls-airfiltern oder puls-jet-filtern) wird für die Gasreinigung und für die Abscheidung von Produktstäuben verwendet. Derartige mit Druckluft oder Druckgas abgereinigte Filter bestehen aus mehreren Filterschlauchreihen oder mehreren Filtertaschen, die jeweils über ein schnellansprechendes Ventil mittels Druckluft abgereinigt werden können. Das heißt, die Feststoffpartikel, die die Filterfläche zusetzen und somit einen Druckverlust verursachen, werden durch einen gegen die Saugrichtung gerichteten Druckgasimpuls abgereinigt. Die Impulslänge beträgt 10 bis 1.000 Millisekunden, wobei jeweils eine Filterschlauchreihe nach der anderen mit einem Druckgasimpuls beaufschlagt wird.

Die Zeit zwischen der Abreinigung einer Schlauchreihe (oder einer Filtertasche) und der Abreinigung der zyklusgemäß nächsten Schlauchreihe wird branchenüblich Pausenzeit genannt. Mehr Aussagekraft hat die Zeit, die zwischen zwei aufeinanderfolgenden Abreinigungen ein- und derselben

-3-

Schlauchreihe liegt. Sie kann als Produkt aus Pausenzeit und Anzahl der Schlauchreihen in einem Abreinigungszyklus errechnet werden und wird effektive Pausenzeit genannt.

Das bekannte Verfahren der Abreinigung der Filterschläuche mittels Druckgasimpuls weist den Nachteil
auf, daß nur eine unvollständige Abreinigung der Feinstaubpartikel von der Filterfläche gelöst, der dann
noch zu einem großen Teil nach dem Druckgasimpuls
wieder auf die Filterfläche angesaugt wird. Je feiner
die Feststoffpartikel sind, umso stärker ist dieser
Effekt (sogenanntes reentrainment). So bildet sich bei
sehr feinen Stäuben auf der Filterfläche ein dichter
Filterkuchen, der einen hohen Druckverlust verursacht.
Dies hat die nachteilige Folge, daß entweder der Ventilator des Sauggebläses mehr leisten muß oder daß man
mit dem Gasdrucksatz zurückgehen bzw. die Filterfläche
vergrößern muß. Die Folge davon sind höhere Betriebs-
bzw. Investitionskosten.

Gegenstand der Erfindung ist ein Verfahren zur Abreinigung von Filtertüchern mittels Druckgas-Impuls der
Feststoffabscheidung aus Gasen, welches dadurch gekennzeichnet ist, daß man den Druckgas-Impuls an dem
Filtertuch kurzzeitig innerhalb einer Impulsgruppe
mehrmals wiederholt, wobei die Impulsfrequenz innerhalb dieser Impulsgruppe zwischen 1 Hertz und 10 Hertz
liegt.

Die Zahl der Druckgas-Impulse innerhalb einer Druckgas-Impulsgruppe kann 2 bis 50, vorzugsweise 3 bis 10

Degussa ◈
0043417

betragen. Die Länge der effektiven Pausenzeit ist abhängig von den physikalischen Eigenschaften des Staubes einschließlich Partikelgröße, vom Gasdrucksatz pro Filterfläche und von der Staubkonzentration und kann mehrere Sekunden bis mehrere Stunden betragen.

Zur Abreinigung wird komprimiertes Gas (meist Preßluft oder Inertgas, wie Stickstoff oder auch Prozessgas) mit einem Überdruck von mindestens 2 bar, vorzugsweise 4 bis 6 bar verwendet. Die Druckgas-Impulslänge kann 10 bis 1.000 Millisekunden, vorzugsweise 50 bis 250 Millisekunden, betragen.

Die Filtertücher können eine beliebige geometrische Form aufweisen. So kann das Filtertuch nicht nur als Filtertasche sondern auch als zylindrischer oder ovaler Schlauch gestaltet sein. Das Filtertuch kann aus Gewebe oder Filz bestehen, wobei der Stoff des Tuches aus Kunststoff, Mineralien, Glasfaser oder Metall bestehen kann.

Der Vorteil des erfindungsgemäßen Verfahrens liegt darin, daß der Druckverlust in der Filtervorrichtung nach dem Abreinigungsvorgang wesentlich niedriger liegt als mit der herkömmlichen Abreinigung durch jeweils einen einzelnen isolierten Impuls. Der Druckgasverband kann dabei gleich groß oder sogar kleiner gehalten werden, da sich die Pausenzeiten bzw. die effektiven Pausenzeiten gegenüber dem bekannten Abreinigungsverfahren um ein Vielfaches verlängern. Dieses Vielfache ist gleich oder größer als die Anzahl der Impulse in einer Impulsgruppe, wenn diese Anzahl im Bereich von 3 bis 10 gewählt wird.

Degussa ◈
0043417
80 190 FH

Das erfindungsgemäße Verfahren ermöglicht also entweder

a) eine erhebliche Steigerung des Gasdrucksatzes bei gleichem Druckverlust, gleicher Filterfläche und gleichem Druckgasverbrauch (Kapazitätserhöhung) oder

b) eine entscheidende Verringerung des Druckverlustes bei gleichem Gasdurchsatz, gleicher Filterfläche und gleichem Druckgasverbrauch (Energieeinsparung, Filtertuchschonung und somit Betriebskostenersparnis) oder

c) eine deutliche Verkleinerung der Filterfläche bei gleichem Druckverlust, gleichem Gasdurchsatz und gleichem Druckgasverbrauch (Investitionskostenersparnis) oder

d) eine erhebliche Abnahme der Abreinigungshäufigkeit und somit Abnahme des Druckgasverbrauches bei gleichem Gasdrucksatz, gleichem Druckverlust und gleicher Filterfläche (Energieeinsparung, Filtertuchschonung und somit Betriebskostenersparnis).

Die Abreinigung mit Druckgas-Impulsgruppen ist wesentlich wirksamer als die Abreinigung der Filtertücher mit einzelnen Druckgas-Impulsen. So wird auch das wiederholte Ansaugen von bereits abgelösten Filterkuchenteilchen stark verringert.

Der Unterschied in der Druckgas-Impuls-Steuerung zwischen den bekannten Verfahren und dem erfindungsgemäßen Verfahren wird anhand der Zeichnung näher erläutert.

Es zeigen:

Figur 1    die schematische Darstellung der Druckgas-Impuls-
Steuerung bei einer Vorrichung mit drei Filterschlauchreihen gemäß dem Stand der Technik
und

Figur 2    die schematische Darstellung der Druckgas-Impuls-
Steuerung bei einer Vorrichung mit drei Filterschlauchreihen gemäß der Erfindung.


In beiden Figuren ist die Abreinigung von drei Filterschlauchreihen (A,B und C) dargestellt, die über jeweils
ein schnellansprechendes Ventil durch komprimiertes Gas
abgereinigt werden. Dieses Ventil ist im Zustand (1) geschlossen und im Zustand (2) geöffnet, d.h., im Zustand
(2) erfolgt die Einblasung des komprimierten Gases. Auf
der horizontalen Achse ist die Zeit t aufgetragen.


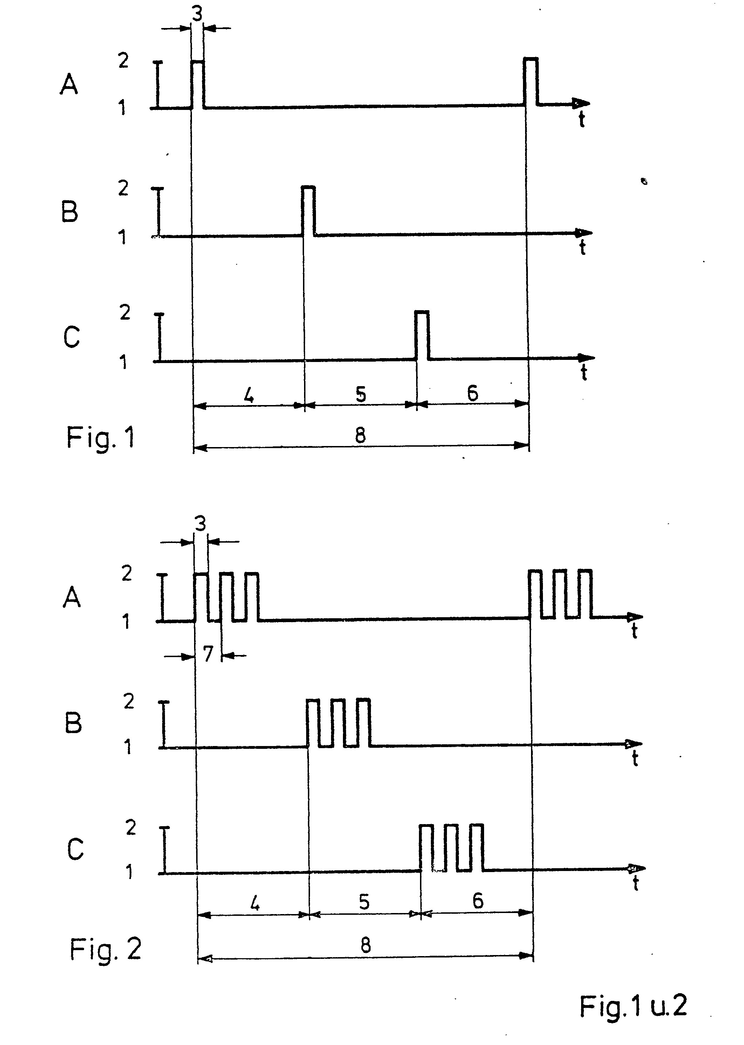

Bei dem in Figur 1 gezeigten Abreinigungsverfahren nach
dem Stand der Technik 3. geschieht die Abreinigung durch
jeweils einen einzelnen Impuls mit einer Länge von 10 bis
1000, vorzugsweise 50 bis 250 Millisekunden. Die Pausenzeiten (4,5,6) können dabei voneinander verschieden oder
auch gleich lang sein.


Bei dem in Figur 2 gezeigten erfindungsgemäßen Abreinigungsverfahren wird der Impuls mit einer Länge 3 von 10 bis
1000, vorzugsweise 50 bis 250 Millisekunden mehrmals wiederholt. In Figur 2 sind beispielsweise Impulsgruppen zu
je 3 Impulsen eingetragen. Die Impulsfrequenz ergibt sich
als Kehrwert des Impulsabstandes (7) und beträgt erfindungsgemäß zwischen 1 Hertz und 10 Hertz. Die Pausenzeiten (4,5,6) können voneinander verschieden oder gleich lang sein, sollten vorzugsweise jedoch gleich lang sein.

Die effektive Pausenzeiten (8) (Zeit von Beginn der Abreinigung bis zum Beginn der darauffolgenden Abreinigung an ein- und derselben Filtertuch) ergibt sich bei den in Figur 1 und Figur 2 gezeigten Beispielen als Summe der drei Pausenzeiten (4), (5) und (6).

Das Verfahren kann bei allen Filtern zur Feststoffabscheidung aus Gasen angewandt werden, die mit komprimierter Luft oder komprimierten Gasen abgereinigt werden. So kann das erfindungsgemäße Verfahren z.B. bei Russen oder Siliciumdioxid-Stäuben verwendet werden.

### Beispiel 1

Abscheidung von Siliciumdioxid-Staub in einem druckluftabgereinigten Schlauchfilter (plus-air-Filter oder plusjetz-Filter). Gleichbleibender Gasdruchsatz pro Filterfläche, wobei die gesamte Anzahl der Impulse pro Zeit gleich ist.

Fall a) bekannte Abreinigung mit effektiver Pausenzeit von 45 Sekunden Druckverlust am Filter: 40 Millibar. Impulslänge: 60 Millisekunden.

Fall b) erfindungsgemäße Abreinigung mit Impulsgruppen zu je 5 Impulsen und einer effektiven Pausenzeit von 225 Sekunden. Impulslänge wie im Fall a) 60 Millisekunden. Impulsabstand 350 Millisekunden. Druckverlust am Filter: 22 Millibar.

Obwohl in beiden Fällen die gleiche Preßluftmenge pro Zeiteinheit verbraucht wird, ist der Druckverlust im erfindungsgemäßen Fall b) nahezu auf den halben Wert des Falles a) abgesunken.

Beispiel 2

Abscheidung von Siliciumdioxid-Staub in einem druckluftabgereinigten Schlauchfilter mit bestimmter Filterfläche. Der Druckverlust im nachsehenden Fall a) ist gleich dem Druckverlust im nachstehenden Fall b).

Fall a) herkömmliche Abreinigung mit effektiver Pausenzeit von 45 Sekunden Gasdurchsatz: 220 m³/h

Fall b) erfindungsgemäße Abreinigung mit Impulsgruppen zu je 5 Impulsen und einer effektiven Pausenzeit von 360 Sekunden. Impulslänge wie im Fall a) 60 Millisekunden. Impulsabstand ca. 350 Millisekunden. Gasdurchsatz: 320 m³/h

Im erfindungsgemäßen Fall b) wird eine kleinere Preßluftmenge verbraucht als im Fall a). In beiden Fällen ist die gesamte Anzahl der Impulse pro Zeit gleicht. Trotzdem kann das Filter bei gleichgroßem Druckverlust im Fall b) mit einem deutlich höheren Gasdurchsatz belastet werden.

Degussa Aktiengesellschaft
6000 Frankfurt am Main 1

Verfahren zur Abreinigung von Filtertüchern
mittels Druckgas-Impuls bei der Feststoffabscheidung aus Gasen

Patentanspruch

Verfahren zur Abreinigung von Filtertüchern mittel Druckgas-Impuls bei der Feststoffabscheidung aus Gasen, dadurch gekennzeichnet, daß man den Druckgas-Impuls an dem
Filtertuch kurzzeitig innerhalb einer Impulsgruppe mehrmals wiederholt, wobei die Impulsfrequenz innerhalb dieser
Impulsgruppe zwischen 1 Hertz und 10 Hertz liegt.

-2-

0043417

1/1

Fig. 1

Fig. 2

Fig. 1 u. 2